# EUROPEAN PATENT APPLICATION

(11) **EP 4 717 578 A1**
(43) Date of publication of application: **01.04.2026**
(21) Application number: 25202556.4
(22) Date of filing: 16.09.2025
(51) Int. Cl.: B62K 19/32, B62D 5/04

(54) **AXLE COMPONENTS AND VEHICLES**

(30) Priority: 27.09.2024 CN 202422384653 U
(71) Applicant: 3KM Pte. Ltd, Singapore 199591 (SG)
(72) Inventor: WANG, Qibiao, 199591 SINGAPORE (SG); WANG, Bowen, 199591 SINGAPORE (SG)
(74) Representative: Santarelli

(57) **Abstract**

The present application provides a shaft assembly and a vehicle. The shaft assembly includes a connecting shaft that includes a first shaft segment, a second shaft segment, and a connecting part. The first shaft segment is configured to be in transmission connection with a first mechanism. The second shaft segment is configured to be in transmission connection with a second mechanism. The connecting part is located between the first shaft segment and the second shaft segment connects the first shaft segment and the second shaft segment. The connecting part is provided with a mounting space capable of accommodating a driver, and configured to be in transmission connection with the driver such that the connecting shaft transfers a power of the driver to the first mechanism and the second mechanism when the connecting part is driven by the driver to rotate. The shaft assembly and the vehicle provided in the present description can overcome the problem of limited functionality during transmission of the transmission shaft.

## Description

### Technical Field

The present application relates to the technical field of means of transportation, and in particular, to a shaft assembly and a vehicle.

### Background of the Invention

With the development of the technology, vehicles become very popular in people's life. A vehicle may include a power system. A power output end of the power system can perform a mechanical movement, thus driving the vehicle to travel and steer. The power system often needs a transmission shaft to transfer a moment of force, for example, a torque. In the existing technology, the transmission shaft is conventionally designed as follows: one end of the transmission shaft is connected to a driver, and the other end thereof is connected to the power output end. However, with this setup, the transmission shaft has limited functionality and cannot meet the transmission requirements in some more complicated transmission scenarios.

Therefore, there is a need for a shaft assembly that can be applied to complicated transmission scenarios.

The content in the background section is merely information known to the inventors, and neither represents that the above information has been found in the public field prior to the filing date of the present disclosure nor represents that it can become the prior art of the present disclosure

### Summary of the Invention

The present description provides a shaft assembly and a vehicle that can solve the problems in the related art.

In a first aspect, the present application provides a shaft assembly. The shaft assembly includes a connecting shaft. The connecting shaft includes a first shaft segment, a second shaft segment, and a connecting part. The first shaft segment is configured to be in transmission connection with a first mechanism. The second shaft segment is configured to be in transmission connection with a second mechanism. The connecting part is located between the first shaft segment and the second shaft segment and configured to connect the first shaft segment and the second shaft segment. The connecting part is provided with a mounting space capable of accommodating a driver, and configured to be in transmission connection with the driver such that the connecting shaft transfers a power of the driver to the first mechanism and the second mechanism when the connecting part is driven by the driver to rotate.

In some embodiments, the connecting part includes at least one connecting sub-part, a first shoulder, and a second shoulder. The first shoulder is connected with the first shaft segment; the second shoulder is connected with the second shaft segment; the first shoulder is spaced apart from the second shoulder along a first axis of the connecting shaft such that the mounting space is formed between the first shoulder and the second shoulder; and the at least one connecting sub-part is connected between the first shoulder and the second shoulder.

In some embodiments, the second shoulder is provided with a mounting hole on a side facing the mounting space and is fixedly connected with the driver via the mounting hole.

In some embodiments, the shaft assembly further includes the driver. The driver is a driving motor, including a stator, a rotor, and a housing. The stator is fixedly connected with the housing; and the rotor includes an output shaft and is rotatably connected with the housing. The mounting bracket includes a fixed part and at least one support part, where the fixed part is disposed in the mounting space and fixedly connected with the housing; and the at least one support part is connected with the fixed part and at least partially located outside the mounting space for connection with an external component.

In some embodiments, the connecting part is provided with a mounting part on a side facing the mounting space; and the connecting part is fixedly connected with the output shaft of the driving motor via the mounting part. The fixed part is disposed at a periphery of the mounting part, and the fixed part is ring-shaped to avoid the output shaft of the driving motor; and the output shaft of the driving motor passes through the fixed part.

In a second aspect, the present application provides a vehicle. The vehicle includes a body, the above shaft assembly, a steering assembly, and a wheel assembly. The steering assembly is rotatably connected with the body and serves as the first mechanism for transmission connection with the shaft assembly. The wheel assembly includes at least one wheel and serves as the second mechanism for transmission connection with the shaft assembly.

In some embodiments, the shaft assembly is connected with the steering assembly via a universal joint structure.

In some embodiments, the wheel assembly includes a base; the base is fixedly connected with the body; a part of the mounting bracket outside the mounting space is fixedly connected with the base. The at least one wheel includes a first wheel and a second wheel; and the first wheel is rotatably connected with the base about a second axis and pivotably connected with the base about a third axis, where the second axis is a central axis of the first wheel, and the third axis extends along a height direction of the vehicle.

In some embodiments, the wheel assembly includes a steering mechanism; the steering mechanism is mechanically connected with the second shaft segment and is rotatably connected with the first wheel and the second wheel; and the shaft assembly is configured to drive the first wheel and the second wheel to steer via the steering mechanism.

In some embodiments, the wheel assembly includes a suspension mechanism; the suspension mechanism is rotatably connected with the base and further rotatably connected with the first wheel about the third axis; and the suspension mechanism, the base, the shaft assembly, the steering mechanism, and the first wheel form a multi-connecting rod structure; where the connecting shaft is configured to, when driven to rotate about the first axis relative to the base, drive the first wheel to rotate about the third axis.

In some embodiments, the steering mechanism includes a steering rocker arm, a first connecting rod, a second connecting rod, and a connecting base; one end of the steering rocker arm is fixedly connected with the second shaft segment, and the other end of the steering rocker arm is rotatably connected with the connecting base about a fourth axis; one end of the first connecting rod is mechanically connected with the connecting base, and the other end of the first connecting rod is rotatably connected with the first wheel about a fifth axis; and the second connecting rod is connected with the second wheel and the connecting base.

In conclusion, the shaft assembly and the vehicle presented in the present application allow the driver with a single power output end to drive the first mechanism and the second mechanism to move via the connecting shaft. The connecting part is provided with the mounting space that facilitates the assembly and connection of the driver and the connecting shaft. When the driver is located in the mounting space, the connection structure between the driver and the connecting shaft can be simplified; and this is conducive to reducing the overall size of the driver and the connecting shaft and reducing the occupied space of the driver and the connecting shaft in an application scenario.

Other functions of the shaft assembly and the vehicle presented in the present application will be enumerated in part in the following description. According to the description, the contents presented by reference numerals and examples will be apparent for those of ordinary skill in the art. Creative aspects of the shaft assembly and the vehicle presented in the present application may be fully explained by practice or by using the methods, devices, and combinations described in the following detailed examples.

### Brief Description of the Drawings

To describe the technical solutions in the embodiments of the present application more clearly, the accompanying drawings required for describing the embodiments are briefly described below. Apparently, the accompanying drawings in the following description show merely some embodiments of the present application, and a person of ordinary skill in the art may derive other drawings from these accompanying drawings without creative efforts.
FIG. 1 is a perspective structural schematic diagram of a vehicle provided according to some embodiments of the present application;
FIG. 2 is a partial structural schematic diagram of a vehicle provided according to some embodiments of the present application;
FIG. 3 is a schematic diagram of a connection structure of a shaft assembly and another mechanism provided according to some embodiments of the present application;
FIG. 4 is another schematic diagram of a connection structure of a shaft assembly and another mechanism provided according to some embodiments of the present application; and
FIG. 5 is a structural schematic diagram of a connecting shaft of a shaft assembly provided according to some embodiments of the present application.

### Detailed Description of Embodiments

The following description provides specific application scenarios and requirements of the present description, with the purpose of enabling those skilled in the art to make and use the content in the present application. For those skilled in the art, various partial modifications to the disclosed embodiments are obvious, and without departing from the spirit and scope of the present description, the general principles defined herein can be applied to other embodiments and application. Therefore, the specification is not limited to the embodiments, but is the consistent with the widest scope of claims.

The terms used herein are merely intended to describe specific examples or embodiments, rather than to limit the present application. For example, unless expressly stated otherwise, the singular forms "a", "an" and "this" used herein may also include plural forms. In the present application, the terms "include" and/or "comprise" refer to the existence of an associated integer, step, operation, element, component and/or group, without excluding the existence of one or more other features, integers, steps, operations, elements, components and/or groups. In other words, other features, integers, steps, operations, elements, components and/or groups may be added to the system/method.

In consideration of the following description, in the present application, these and other features, the operations and functions of related elements of the structure, as well as the economy of the combination and manufacturing of components can be significantly improved. With reference to the drawings, all of these form part of the present application. However, it should be clearly understood that the drawings are merely intended for illustration and description purposes, rather than to limit the scope of the present application. It should be understood that the accompanying drawings are not drawn to scale.

The flowchart used in the present application illustrates the operations implemented by the system according to some embodiments in the present application. It should be clearly understood that the operations of the flowchart may be implemented out of sequence. Instead, operations may be implemented in reverse sequence or simultaneously. In addition, one or more other operations may be added to the flowchart. One or more operations may be removed from the flowchart.

In the present application, "X includes at least one of A, B, or C" means X includes at least A, X includes at least B, or X includes at least C. In other words, X may include only one of A, B, and C, or include any combination of A, B, and C and other possible content/element. The any combination of A, B, and C may be A, B, C, AB, AC, BC, or ABC.

In the present application, unless otherwise explicitly specified, an association relationship between structures may be a direct association relationship or an indirect association relationship. For example, for the description "A is connected to B", unless it is explicitly described that A is directly connected to B, it will be construed as that A may be directly connected to B or indirectly connected to B. For another example, for the description "A is over B", unless it is explicitly described that A is directly above B (A and B are adjacent and A is above B), it will be construed as that A may be directly above B, or A may be indirectly over B (A and B are spaced apart by other element and A is above B), and so on.

A vehicle may include a power system. A power output end of the power system can perform a mechanical motion, thus driving the vehicle to travel and steer. The power system often needs to transfer a moment of force through a transmission shaft. For example, the power system can transfer a torque through the transmission shaft. In the prior art, a conventional manner of working of the transmission shaft is as follows: one end of the transmission shaft is connected to a driver, and the other end thereof is connected to the power output end. However, the transmission shaft has limited functionality in such a design, and thus cannot meet the transmission requirements in some complicated transmission scenarios. Therefore, there is a need for a shaft assembly that can be applied to complicated transmission scenarios.

The shaft assembly/axel component presented in the present description is provided with a connecting shaft so that a driver with a single power output end can drive a first mechanism and a second mechanism to move. The connecting part is provided with the mounting space that facilitates the mounting and connection of the driver and the connecting shaft. As the driver is arranged in the mounting space, the connection structure between the driver and the connecting shaft can be simplified on the one hand; and on the other hand, this is conducive to reducing the overall size of the driver and the connecting shaft and reducing the occupied space of the driver and the connecting shaft in an application scenario. In this way, the shaft assembly may have more functions and can be applied to complicated transmission scenarios.

The vehicle presented in the present application may be a short-distance transportation vehicle. In the present application, the short-distance transportation vehicle refers to various devices and tools for meeting individuals' transportation demands within a relatively short distance range. Such devices typically feature portability, maneuverability, and environmental friendliness, are suitable for short distance traveling in cities or specific areas, and can effectively replace or supplement traditional vehicles, thereby reducing traffic congestion and the environmental pollution. Specific examples of the short-distance transportation vehicle include scooters, electric scooters, electric balanced vehicles, and other similar light vehicles. The above-mentioned vehicle is described by taking a scooter as an example in the present application. However, it will be understood by those skilled in the art that other types of vehicles are also applicable to the invention of the present application without departing from the spirit thereof.

The vehicle may be a four-wheeler, a tricycle, or a bicycle, etc. The vehicle has a small size and a low weight, and is very suitable for short distance traveling. In particular, the vehicle has a small dimension in a width direction thereof. The width direction of the vehicle may be an axial direction of a wheel of the vehicle. That is, there is a small wheel track between two coaxial wheels of the vehicle 1.

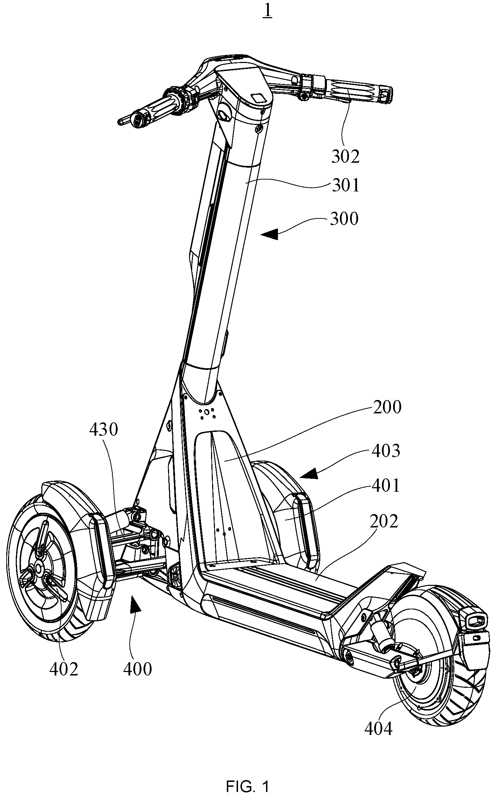

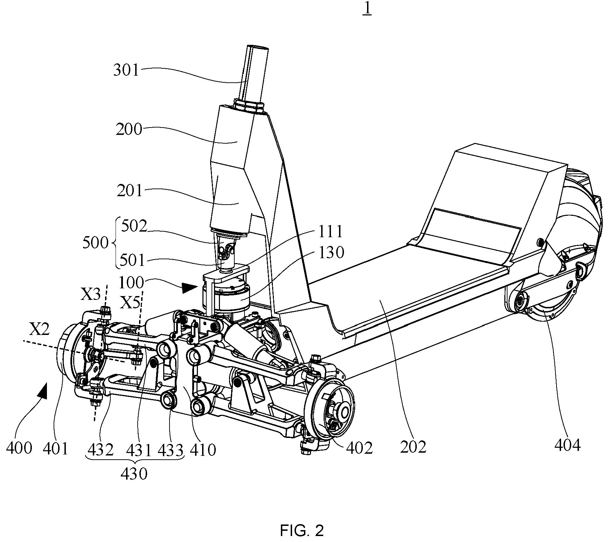

FIG. 1 is a perspective structural schematic diagram of a vehicle provided according to some embodiments of the present application. FIG. 2 is a partial structural schematic diagram of a vehicle provided according to some embodiments of the present application. As shown in FIG. 1 and FIG. 2, the vehicle 1 includes a body 200, a shaft assembly 100, a steering assembly 300, and a wheel assembly 400.

The body 200 may be a base and a main body structure of the vehicle 1. The body 200 may be used to connect various components of the vehicle 1, such as wheels and a suspension mechanism 430. The body 200 may be further configured to carry a rider. The body 200 may have a plurality of different structures to adapt to different application scenes. For example, the vehicle 1 is a tricycle or a bicycle, where the bodies 200 of the tricycle or the bicycle may have different structures. FIG. 1 in the present application is described by taking a three-wheeled scooter as an example. Those skilled in the art will understand that other structures of the body 200 also fall into the protection scope of the present application. The body 200 may be made of a metal material, such as a carbon steel material, an aluminum alloy material, and a titanium alloy material. The body 200 may also be made of a carbon fiber material. The body 200 may also be made of a combination of a plurality of different materials, which is not limited herein.

The body 200 may also include a carrying part 202 for carrying the user. The carrying part 202 in the body 200 as shown in FIG. 1 may be configured to carry the feet of the user. The user can drive the vehicle 1 by standing on the body 200. In some embodiments, the body 200 may also include a seat so that the user can drive the vehicle 1 by sitting on the seat. In some embodiments, the body 200 may also include a storage part (not shown) for storing items. In some embodiments, the body 200 may also include other parts, which is not limited herein.

The wheel assembly 400 includes at least one wheel. The at least one wheel may be a travel part of the vehicle 1 to realize traveling of the vehicle 1. The at least one wheel may be connected with the body 200 to drive the body 200 to travel. The at least one wheel may be an inflatable tire, or may be a solid rubber tire, which is not limited herein.

In some embodiments, the at least one wheel may include a first wheel 401 and a second wheel 402. The first wheel 401 and the second wheel 402 may be located on two sides of the body 200, respectively, so that the body 200 can stand by itself. Further, the first wheel 401 and the second wheel 402 may be symmetrically arranged on the two sides of the body 200.

In some embodiments, the vehicle 1 may include the first wheel 401 and the second wheel 402, such as a balanced vehicle. In some embodiments, the vehicle 1 may further include other wheels which are distributed with the first wheel 401 and the second wheel 402 along a longitudinal direction of the body 200. The longitudinal direction may be a traveling direction of the body 200.

In some embodiments, the first wheel 401 and the second wheel 402 may be front wheels 403 of the vehicle 1. In this case, the vehicle 1 may further include a rear wheel 404. There may be one rear wheel 404 or two rear wheels 404 that are symmetrically distributed on the two sides of the body 200.

In some other embodiments, the first wheel 401 and the second wheel 402 may be rear wheels 404 of the vehicle 1. In this case, the vehicle 1 may further include a front wheel 403. There may be one front wheel 403 or two front wheels 403 that are symmetrically distributed on the two sides of the body 200. The body 200 may be connected to the front wheel 403 and the rear wheel 404. In the vehicle 1 as shown in FIG. 1, the description is made by taking as an example that the first wheel 401 and the second wheel 402 are the front wheels 403 of the vehicle 1. Those skilled in the art will understand that the first wheel 401 and the second wheel 402 being the rear wheels 404 of the vehicle 1 also falls within the protection scope of the present application.

The vehicle 1 may have a plurality of traveling modes. For example, the traveling modes include an automatic driving mode and a manual driving mode. When the vehicle 1 is in the automatic driving mode, the vehicle 1 may realize automatic steering by the steering assembly 300. In particular, the vehicle 1 has a controller which is coupled with the driver. When the vehicle 1 is in the automatic driving mode, the controller may control the driver to work according to road conditions and a traveling route, thereby realizing automatic steering of the vehicle 1.

In order to complete the steering control on the vehicle in a plurality of traveling modes, the present application provides a novel shaft structure.

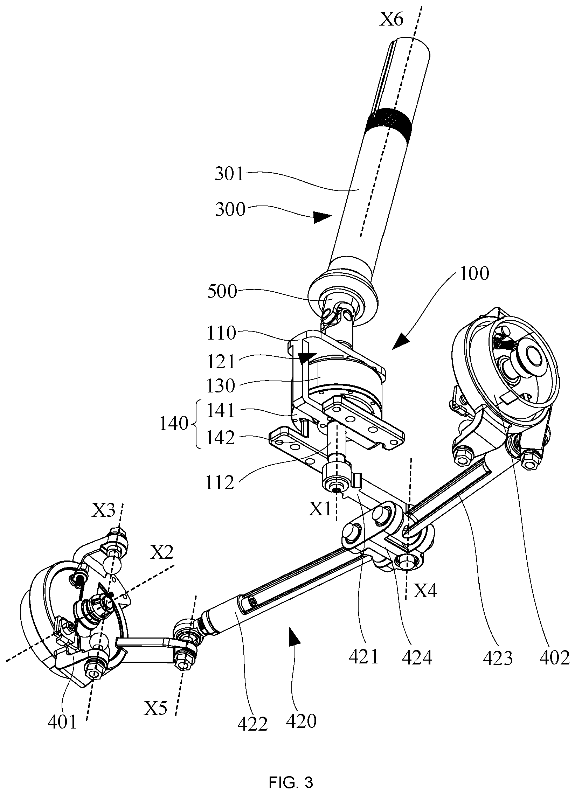

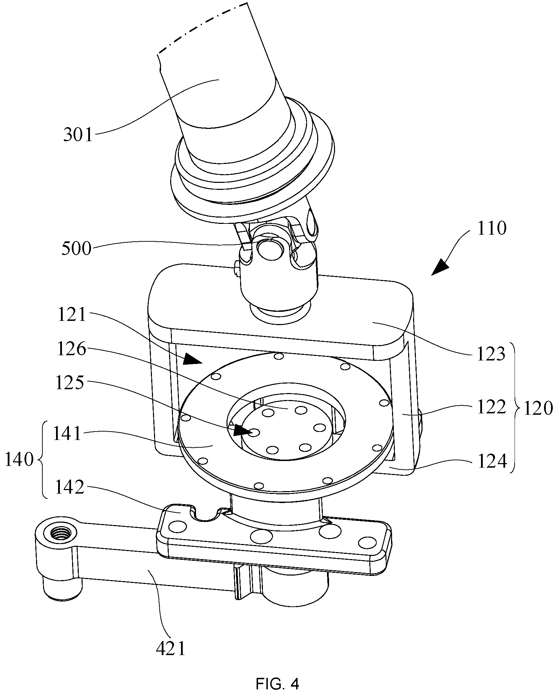

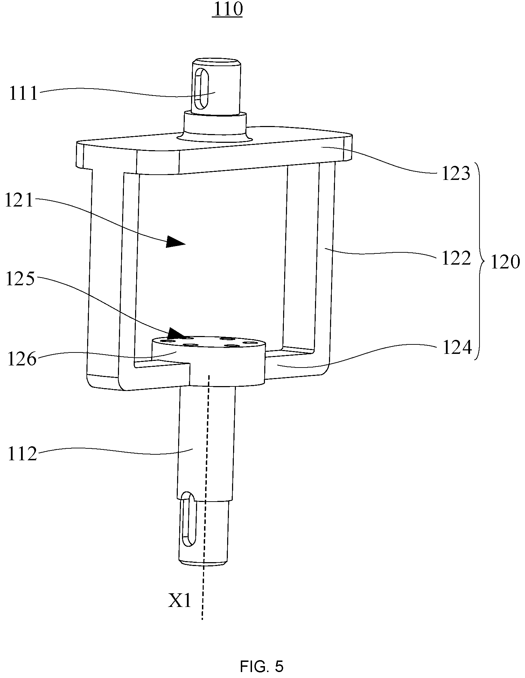

FIG. 3 is a schematic diagram of a connection structure of a shaft assembly 100 and another mechanism provided according to some embodiments of the present application. FIG. 4 is another schematic diagram of a connection structure of a shaft assembly 100 and another mechanism provided according to some embodiments of the present application. FIG. 5 is a structural schematic diagram of a connecting shaft of a shaft assembly 100 provided according to some embodiments of the present application. It needs to be noted that the shaft assembly 100 may be applied to a plurality of mechanical devices including vehicles. For example, as shown in FIG. 1 and FIG. 2, the shaft assembly 100 may be applied to transmission of internal structures of the vehicle 1.

As shown in FIG. 2 to FIG. 5, the shaft assembly 100 includes a connecting shaft 110. The connecting shaft 110 includes a first shaft segment 111, a second shaft segment 112, and a connecting part 120. The first shaft segment 111 is configured to be in transmission connection with a first mechanism. The second shaft segment 112 is configured to be in transmission connection with a second mechanism. The connecting part 120 is located between the first shaft segment 111 and the second shaft segment 112 to connect the first shaft segment 111 and the second shaft segment 112. For example, the first mechanism is a steering assembly 300, and the second mechanism is a wheel assembly 400.

In some embodiments, the first shaft segment 111 and the second shaft segment 112 share a central axis, and the central axis of the first shaft segment 111 and the second shaft segment 112 is an axis of rotation of the connecting shaft 110, i.e., a first axis X1. Further, the connecting part 120, the first shaft segment 111, and the second shaft segment 112 share a central axis.

The connecting part 120 may be provided with a mounting space 121 capable of accommodating a driver, and configured to be in transmission connection with the driver such that the connecting shaft 110 transfers a power of the driver to the first mechanism and the second mechanism when the connecting part 120 is driven by the driver to rotate.

In a working scenario of the connecting shaft 110, the driver, the first mechanism, and the second mechanism may be spaced apart from one another, and the connecting shaft 110 may be connected with the driver, the first mechanism, and the second mechanism. The driver with a single power output end can drive the first mechanism and the second mechanism to move via the connecting shaft 110. Compared with a driver with two power output ends, the driver with a single power output end is simpler in structural composition and smaller in size. For example, the driver may be a driving motor 130. Compared with a driving motor 130 with two output shafts, the driving motor 130 with a single output shaft is simpler in structural composition and smaller in size.

The connecting part 120 is provided with the mounting space 121 that facilitates the mounting and connection of the driver and the connecting shaft 110. When the driver is located in the mounting space 121, the connection structure between the driver and the connecting shaft 110 can be simplified on the one hand; and on the other hand, this is conducive to reducing the overall size of the driver and the connecting shaft 110 and reducing the occupied space of the driver and the connecting shaft 110 in an application scenario. For example, when the connecting shaft 110 is in operation, two ends of the connecting shaft 110 are connected to the first mechanism and the second mechanism, respectively. The driver is disposed in the mounting space 121 so that the space of the middle part of the connecting shaft 110 can be fully utilized.

In some embodiments, the mounting space 121 is an open space communicated with the outside. In some other embodiments, the mounting space 121 is an enclosable space.

In some embodiments, the driver may be a hydraulically driven apparatus or a pneumatically driven apparatus.

In some embodiments, when the first mechanism is driven by an external force to move, the connecting shaft 110 may be driven by the first shaft segment 111 to rotate, thus driving the second mechanism and the driver to move.

The shaft assembly may also be applied to a mechanical device which is not a vehicle. In some embodiments, the first mechanism is a driver. Each of the first shaft segment 111 and the connecting part 120 may be driven by one driver to rotate, thus together driving the second mechanism to move. In some embodiments, when the second mechanism is driven by an external force to move, the connecting shaft 110 may be driven by the second shaft segment 112 to rotate, thus driving the first mechanism and the driver to move. In some embodiments, the second mechanism is a driver. Each of the second shaft segment 112 and the connecting part 120 may be driven by one driver to rotate, thus together driving the first mechanism to move.

In some embodiments, as shown in FIG. 2 to FIG. 5, the connecting part 120 includes at least one connecting sub-part 122, a first shoulder 123, and a second shoulder 124. **The** first shoulder 123 is connected with the first shaft segment 111. **The** second shoulder 124 is connected with the second shaft segment 112. **The** first shoulder 123 is spaced apart from the second shoulder 124 along the first axis X1 of the connecting shaft 110 such that the mounting space 121 is formed between the first shoulder 123 and the second shoulder 124. **The** at least one connecting sub-part 122 is connected between the first shoulder 123 and the second shoulder 124.

In a direction perpendicular to the first axis X1, a size of the first shoulder 123 may be greater than that of the first shaft segment 111, and a size of the second shoulder 124 may be greater than that of the second shaft segment 112. The size of the first shaft segment 111 and the size of the second shaft segment 112 are small so that the material of the connecting shaft 110 can be saved and the weight of the connecting shaft 110 can be reduced. The size of the first shoulder 123 and the size of the second shoulder 124 are large such that the mounting space 121 has enough space to accommodate the driver.

The number and size of connecting sub-parts 122 can be designed according to a transmission requirement of the connecting shaft 110. For example, there may be two connecting sub-parts 122, and the two connecting sub-parts 122 are disposed symmetrically.

In some embodiments, as shown in FIG. 2 to FIG. 5, the second shoulder 124 is provided with a mounting hole 125 communicated with the mounting space 121 and is fixedly connected with the driver through the mounting hole 125. Further, the mounting hole 125 may penetrate through the second shoulder 124 along a direction away from the mounting space 121, and the mounting hole 125 avoids the second shaft segment 112 on a side of the second shoulder 124 away from the mounting space 121. In the assembling process of the second shoulder 124 and the driver, a fixing screw may be inserted into the mounting hole 125 from the side of the second shoulder 124 away from the mounting space 121 and further inserted into a connecting hole of the driver, thereby realizing a fixed connection between the second shoulder 124 and the driver.

In some embodiments, the connecting part 120 is provided with a mounting part 126 on a side thereof facing the mounting space 121. An opening of the mounting hole 125 facing the mounting space 121 is located at the mounting part 126. The mounting part 126 may abuts against and fixed connected with the driver. Further, along a direction towards the mounting space 121, the mounting part 126 may protrude from other portions of the connecting part 120 so as to be connected with the driver.

In some embodiments, there may be a plurality of mounting holes 125. The plurality of mounting holes 125 are distributed at intervals along the circumferential direction of the mounting part 126.

In some embodiments, as shown in FIG. 2 to FIG. 5, the shaft assembly 100 further includes a driver and a mounting bracket 140. The driver is a driving motor 130 and includes a stator, a rotor, and a housing. The stator is fixedly connected with the housing, and the rotor includes an output shaft and is rotatably connected with the housing. The mounting bracket 140 includes a fixed part 141 and at least one support part 142. The fixed part 141 is disposed in the mounting space 121 and fixedly connected with the housing; and the at least one support part 142 is connected with the fixed part 141 and at least partially located outside the mounting space 121 for connection with an external component.

The at least one support part 142 may be fixedly connected with the external component so that the driving motor 130 can be mounted in the application scenario. When the driving motor 130 is in operation, the output shaft of the driving motor 130 may rotate relative to the housing, thus driving the connecting shaft 110 to rotate relative to the mounting bracket 140 and the external component. Further, when the driving motor 130 works, the output shaft of the driving motor 130 is capable of rotating about the first axis X1.

In some embodiments, the number of support parts 142 is two, and the two support parts 142 are disposed symmetrically. Further, along the circumferential direction of the connecting shaft 110, the support part 142 and the connecting sub-part 120 are arranged alternately to avoid from each other.

In some embodiments, as shown in FIG. 2 to FIG. 5, the connecting part 120 is fixedly connected to the output shaft of the driving motor 130 through the mounting part 126. The fixed part 141 is disposed at a periphery of the mounting part 126, and the fixed part 141 is ring-shaped to avoid the output shaft of the driving motor 130 or the mounting part 126. In this way, the shape of the fixed part 141 may be adapted to the outline of the driving motor 130 so as to facilitate the assembly and connection of the fixed part 141 and the driving motor 130.

In some embodiments, the output shaft of the driving motor 130 passes through the fixed part 141. In some other embodiments, the mounting part 126 passes through the fixed part 141.

It needs to be noted that the shaft assembly 100 may be applied to a plurality of mechanical devices including vehicles. For example, as shown in FIG. 1 and FIG. 2, the shaft assembly 100 may be applied to transmission of internal structures of the vehicle 1.

In some embodiments, when the vehicle 1 is in the automatic driving mode, the user can also manually drive the shaft assembly 100 and the wheel assembly 400 to rotate relative to the body 200 via the steering assembly 300, thereby controlling the steering of the vehicle 1.

The steering assembly 300 is rotatably connected with the body 200 and serves as the above-mentioned first mechanism for transmission connection with the shaft assembly 100. Further, the body 200 is pivotably connected with the steering column 301.

In some embodiments, the steering assembly 300 includes a steering column 301 and a handle bar 302. The handle bar 302 is fixedly connected with the steering column 301. The body 200 includes a head tube 201. The steering column 301 is rotatably connected with the head tube 201 such that the steering column 301 is rotatably connected with the body 200.

In some other embodiments, the steering assembly 300 includes a steering wheel. The handle bar 302 can be replaced with the steering wheel.

The wheel assembly 400 serves as the above-mentioned second mechanism for transmission connection with the shaft assembly 100. In some embodiments, the wheel assembly 400 includes a front wheel 403. The front wheel 403 may be rotatably connected with the body 200 via the steering column 301 and the head tube 201.

When it is necessary to turn the vehicle 1, the user can move the handlebars 302 relative to the vehicle body 200, thereby driving the shaft assembly 100 and the wheel assembly 400 to rotate relative to the body 200, allowing the user to control the steering of the vehicle 1.

The first shaft segment 111 and the second shaft segment 112 can be arranged at two ends of the shaft assembly 100, respectively. The first shaft segment 111 can be connected to the steering assembly 300, and the second shaft segment 112 can be connected to the wheel assembly 400. When the steering assembly 300 is driven by the user to rotate, the shaft assembly 100 can be driven by the first shaft segment 111 to rotate, thus driving the vehicle 1 to steer. Via the shaft assembly 100, a driver with a single power output end can drive the steering assembly 300 and the wheel assembly 400 to move. Compared with a driver with two power output ends, the driver with the single power output end is simpler in structural composition and smaller in size, and occupies a smaller mounting space 121 on the vehicle 1.

Moreover, by disposing the driver in the mounting space 121, the connection structure between the driver and the connecting shaft 110 can be simplified on the one hand; and on the other hand, this is conducive to reducing the overall size of the driver and the connecting shaft 110 and reducing the occupied space of the driver and the connecting shaft 110 in the vehicle 1. For example, when a spacing distance between the steering assembly 300 and the wheel assembly 400 is preset, positions of and a distance between the two ends of the shaft assembly 100 can be determined correspondingly. In this case, the driver is disposed in the mounting space 121 such that the structural layout of the shaft assembly 100 is more compact.

In some embodiments, as shown in FIG. 2 to FIG. 5, the shaft assembly 100 is connected with the steering assembly 300 via a universal joint structure 500. With the universal joint structure 500, even though the first axis X1 is not collinear with the axis X6 of rotation of the steering assembly 300, a torque can still be transferred between the shaft assembly 100 and the steering assembly 300.

In some embodiments, the universal joint structure 500 may include a first rotating part 501 and a second rotating part 502. The first rotating part 501 can be fixedly connected with the first shaft segment 111. The second rotating part 502 can be fixedly connected with the steering column 301. The first rotating part 501 and the second rotating part 502 are rotatably connected and can rotate relatively along a plurality of directions.

In some embodiments, as shown in FIG. 2 to FIG. 5, the wheel assembly 400 includes a base 410, a steering mechanism 420, and a suspension mechanism 430.

The base 410 is fixedly connected with the body 200, and a part of the mounting bracket 140 outside the mounting space 121 is fixedly connected with the base 410. In particular, the support part 142 can be fixedly connected with the base 410 so that the driving motor 130 can be mounted on the base 410. When the driving motor 130 is in operation, the output shaft of the driving motor 130 may rotate relative to the housing, thus driving the connecting shaft 110 to rotate relative to the mounting bracket 140 and the base 410.

The first wheel 401 is rotatably connected with the base 410 about a second axis X2 and pivotably connected with the base 410 about a third axis X3, where the second axis X2 is the central axis of the first wheel 401. The third axis X3 extends along a height direction of the vehicle 1. When the first wheel 401 rotates relative to the base 410 about the second axis X2, the vehicle 1 can be driven to move. When the first wheel 401 rotates relative to the base 410 about the third axis X3, the vehicle 1 can be driven to steer. For a mounting structure of the second wheel 402, a reference may be made to a mounting structure of the first wheel 401, which will not be described here redundantly. In this way, the driving motor 130 can drive the first wheel 401 and the second wheel 402 to turn synchronously.

In some embodiments, as shown in FIG. 2 to FIG. 5, the steering mechanism 420 is mechanically connected with the second shaft segment 112 and is rotatably connected with the first wheel 401 and the second wheel 402. The shaft assembly 100 drives the first wheel 401 and the second wheel 402 to steer via the steering mechanism 420. Further, the steering mechanism 420 includes a steering rocker arm 421, a first connecting rod 422, a second connecting rod 423, and a connecting base 424. One end of the steering rocker arm 421 is fixedly connected with the second shaft segment 112, and the other end of the steering rocker arm 421 is rotatably connected with the connecting base 424 about a fourth axis X4. One end of the first connecting rod 422 is mechanically connected with the connecting base 424, and the other end of the first connecting rod 422 is rotatably connected with the first wheel 401 about a fifth axis X5. The second connecting rod 423 is connected with the second wheel 402 and the connecting base 424.

When the driving motor 130 is in operation, the output shaft of the driving motor 130 can drive the steering rocker arm 421 to rotate relative to the base 410 about the first axis X1, and can drive the connecting base 424, the first connecting rod 422, and the second connecting rod 423 to rotate relative to the base 410 about the fourth axis X4 via the steering rocker arm 421; meanwhile, the first connecting rod 422 can drive the first wheel 401 to rotate relative to the base 410 about the fifth axis X5, thus realizing the steering of the first wheel 401.

In some embodiments, as shown in FIG. 2 to FIG. 5, the suspension mechanism 430 is rotatably connected with the base 410 and also rotatably connected with the first wheel 401 about the third axis X3. The suspension mechanism 430, the base 410, the shaft assembly 100, the steering mechanism 420, and the first wheel 401 form a multi-connecting rod structure. When the connecting shaft 110 is driven to rotate about the first axis X1 relative to the base 410, it drives the first wheel 401 to rotate about the third axis X3.

The suspension mechanism 430 can transfer a force and a moment of force acting between the body 200 and the wheel. The suspension mechanism 430 may also buffer an impact on the body 200 caused by an uneven road and reduce the resulting vibration to ensure that the vehicle 1 can travel smoothly. In some embodiments, the suspension mechanism 430 may include a shock absorber 433, an upper fork arm 431, and a lower fork arm 432. The first wheel 401, the upper fork arm 431, the lower fork arm 432, and the base 410 may form a planar four-connecting rod structure.

In summary, the shaft assembly 100 and the vehicle 1 presented in the present description allow the driver with a single power output end to drive the first mechanism and the second mechanism to move via the connecting shaft 110. The connecting part 120 is provided with the mounting space 121 that facilitates the mounting and connection of the driver and the connecting shaft 110. When the driver is located in the mounting space 121, the connection structure between the driver and the connecting shaft 110 can be simplified on the one hand; and on the other hand, this is conducive to reducing the overall size of the driver and the connecting shaft 110 and reducing the occupied space of the driver and the connecting shaft 110 in an application scenario.

The foregoing describes the specific embodiments of the present application. Other embodiments fall within the scope of the appended claims. In some cases, the actions or steps described in the claims may be performed in sequences different from those in the embodiments and still achieve expected results. In addition, the processes depicted in the accompanying drawings do not necessarily require the specific orders or sequential orders shown for achieving the expected results. In some implementations, multitasking and parallel processing are also possible or may be advantageous.

In summary, after reading this detailed disclosure, those skilled in the art can understand that the foregoing detailed disclosure may be presented by way of example only, and may not be limited. Although there is no clear description, those skilled in the art can understand that the present application intends to cover various reasonable changes, improvements and modifications of the embodiments. These changes, improvements and modifications are intended to be proposed in this application and are within the spirit and scope of the exemplary embodiments of this application.

In addition, some specific terms in this application have been used to describe the embodiments of this application. For example, "one embodiment", "an embodiment" and/or "some embodiments" mean that a specific feature, structure, or characteristic described in combination with the embodiment may be included in at least one embodiment of the present application. Therefore, it can be emphasized and should be understood that two or more references to "an embodiment" or "one embodiment" or "an alternative embodiment" in various parts of the present application do not necessarily all refer to the same embodiment. In addition, specific feature, structure, or characteristic may be appropriately combined in one or more embodiments of the present application.

It should be understood that in the foregoing description of the embodiments of the present application, to help understand a feature, and for the purpose of simplifying the present application, the present application sometimes combines various features in a single embodiment, a drawing, or description thereof. However, this does not mean that the combination of these features is necessary. It is entirely possible for those skilled in the art to mark some of the devices as a single embodiment for understanding when reading this application. In other words, the embodiments in this application can also be understood as an integration of multiple sub-embodiments. The content of each sub-embodiment is also true when it is less than all the characteristics of a single previously disclosed embodiment.

Each patent, patent application, patent application publication, and other materials referenced in this disclosure, such as articles, books, specifications, publications, documents, literature, etc. (excluding any related historical examination documents), are incorporated by reference for all purposes relevant to this disclosure, including in the description and claims of this disclosure. However, in the event of any inconsistency or conflict between the descriptions, definitions, and/or terms used in these materials and those used in this disclosure, the terms used in this disclosure shall prevail.

Finally, it should be understood that the embodiment of the application disclosed herein is an explanation of the principle of the embodiment of the application. Other modified embodiments are also within the scope of this application. Therefore, the embodiments disclosed in this application are merely examples rather than limitations. Those skilled in the art can adopt alternative configurations according to the embodiments of the present application to implement the disclosure in this application. Therefore, the embodiments of this application are not limited to those exactly described in the application.

## Claims

1. A shaft assembly, **characterized by** comprising: a connecting shaft, wherein the connecting shaft comprises:
a first shaft segment configured to be in transmission connection with a first mechanism;
a second shaft segment configured to be in transmission connection with a second mechanism; and
a connecting part located between the first shaft segment and the second shaft segment to connect the first shaft segment and the second shaft segment, wherein
the connecting part is provided with a mounting space capable of accommodating a driver, and configured to be in transmission connection with the driver such that the connecting shaft transfers a power of the driver to the first mechanism and the second mechanism when the connecting part is driven by the driver to rotate.

2. The shaft assembly according to claim 1, **characterized in that**
the connecting part comprises at least one connecting sub-part, a first shoulder, and a second shoulder;
the first shoulder is connected with the first shaft segment;
the second shoulder is connected with the second shaft segment;
the first shoulder is spaced apart from the second shoulder along a first axis of the connecting shaft such that the mounting space is formed between the first shoulder and the second shoulder; and
the at least one connecting sub-part is connected between the first shoulder and the second shoulder.

3. The shaft assembly according to claim 2, **characterized in that**
the second shoulder is provided with a mounting hole on a side facing the mounting space and is fixedly connected with the driver via the mounting hole.

4. The shaft assembly according to claim 3, **characterized in that**
the mounting hole penetrates the second shoulder in a direction away from the mounting space, and on a side of the second shoulder away from the mounting space, the mounting hole is configured to avoid the second shaft segment.

5. The shaft assembly according to any one of claims 1 to 4, further comprising:
the driver, which is a driving motor, comprising a stator, a rotor, and a housing, wherein the stator is fixedly connected with the housing, and the rotor comprises an output shaft and is rotatably connected with the housing; and
a mounting bracket comprising a fixed part and at least one support part, wherein the fixed part is disposed in the mounting space and fixedly connected with the housing, and the at least one support part is connected with the fixed part and at least partially located outside the mounting space for connection with an external component.

6. The shaft assembly according to any one of claims 2 to 4, further comprising:
the driver, which is a driving motor, comprising a stator, a rotor, and a housing, wherein the stator is fixedly connected with the housing, and the rotor comprises an output shaft and is rotatably connected with the housing;
a mounting bracket comprising a fixed part and at least one support part, wherein the fixed part is disposed in the mounting space and fixedly connected with the housing, and the at least one support part is connected with the fixed part and at least partially located outside the mounting space for connection with an external component; and
along a circumferential direction of the connecting shaft, the at least one support part and the at least one connecting sub-part are alternately arranged to avoid each other.

7. The shaft assembly according to claim 5 or 6, **characterized in that** the connecting part is provided with a mounting part communicated with the mounting space, and the connecting part is fixedly connected with the output shaft of the driving motor via the mounting part;
the fixed part is disposed at a periphery of the mounting part, and the fixed part is ring-shaped to avoid the output shaft of the driving motor; and
the output shaft of the driving motor passes through the fixed part.

8. A vehicle, **characterized by** comprising:
a body;
the shaft assembly according to any one of claims 1 to 7;
a steering assembly rotatably connected with the body and serving as the first mechanism for transmission connection with the shaft assembly; and
a wheel assembly comprising at least one wheel and serving as the second mechanism for transmission connection with the shaft assembly.

9. The vehicle according to claim 8, **characterized in that**
the shaft assembly is connected with the steering assembly via a universal joint structure.

10. The vehicle according to claim 9, **characterized in that**
the steering assembly comprises a steering column; and
the universal joint structure comprises a first rotating part and a second rotating part, the first rotating part is fixedly connected to the first shaft segment, the second rotating part is fixedly connected to the steering column, and the first rotating part and the second rotating part are rotatably connected and are rotatable relative to each other in a plurality of directions.

11. The vehicle according to any one of claims 8 to 10, **characterized in that** the wheel assembly comprises a base, the base is fixedly connected with the body, the mounting bracket is fixedly connected with the base outside the mounting space;
the at least one wheel comprises a first wheel and a second wheel; and
the first wheel is rotatably connected with the base about a second axis and pivotably connected with the base about a third axis,
wherein the second axis is a central axis of the first wheel, and the third axis extends along a height direction of the vehicle.

12. The vehicle according to claim 11, **characterized in that**
the wheel assembly comprises a steering mechanism; the steering mechanism is mechanically connected with the second shaft segment and is rotatably connected with the first wheel and the second wheel respectively; and the shaft assembly is configured to drive the first wheel and the second wheel to steer respectively via the steering mechanism.

13. The vehicle according to claim 12, **characterized in that**
the wheel assembly comprises a suspension mechanism, the suspension mechanism is rotatably connected with the base and further rotatably connected with the first wheel about the third axis; and the suspension mechanism, the base, the shaft assembly, the steering mechanism, and the first wheel form a multi-connecting rod structure,
wherein the connecting shaft is configured to, when driven to rotate about the first axis relative to the base, drive the first wheel to rotate about the third axis.

14. The vehicle according to claim 13, **characterized in that**
the suspension mechanism comprises a shock absorber, an upper fork arm, and a lower fork arm; and
the first wheel, the upper fork arm, the lower fork arm and the base form a planar four-connecting rod structure.

15. The vehicle according to any one of claims 12 to 14, **characterized in that**
the steering mechanism comprises a steering rocker arm, a first connecting rod, a second connecting rod, and a connecting base, an end of the steering rocker arm is fixedly connected with the second shaft segment, another end of the steering rocker arm is rotatably connected with the connecting base about a fourth axis, an end of the first connecting rod is mechanically connected with the connecting base, another end of the first connecting rod is rotatably connected with the first wheel about a fifth axis; and the second connecting rod is connected with the second wheel and the connecting base respectively.
